# EUROPÄISCHE PATENTANMELDUNG

(11) **EP 4 764 234 A1**
(43) Veröffentlichungstag der Anmeldung: **24.06.2026**
(21) Anmeldenummer: 25223859.7
(22) Anmeldetag: 16.12.2025
(51) Int. Cl.: F16B 23/00

(54) **SCHRAUBELEMENT, BETÄTIGUNGSWERKZEUG, VERWENDUNG UND FORMWERKZEUG**

(30) Priorität: 20.12.2024 DE 102024139491; 15.05.2025 DE 102025118779
(71) Anmelder: SPAX International GmbH & Co. KG, 58256 Ennepetal (DE)
(72) Erfinder: KAMROWSKI, Markus, 58300 Wetter (DE); KROESEN, Klaus, 46509 Xanten (DE); ÖLKE, Viktor, 48499 Salzbergen (DE)
(74) Vertreter: Dr. Solf & Zapf Patent- und Rechtsanwalts PartG mbB

(57) **Zusammenfassung**

Die vorliegende Erfindung betrifft ein Schraubelement (1) mit einem Kraftangriff (8) für ein Betätigungswerkzeug (9). Der Kraftangriff (8) weist eine Mehrzahl von auf einem Umfang um eine Mittelachse (M) verteilt angeordneten Vorsprüngen (10) und Rücksprüngen (11) auf, die abwechselnd ineinander übergehen. Die Vorsprünge (10) und die Rücksprünge (11) sind gewölbt ausgebildet und erstrecken sich in einem Einführabschnitt (12) jeweils parallel zur Mittelachse (M).

Erfindungsgemäß ist in einem Endbereich (13) des Kraftangriffs (8) ein kegelförmiger Abschnitt (14) angeordnet und es erstreckt sich zwischen dem kegelförmigen Abschnitt (14) und dem Einführabschnitt (12) eine den kegelförmigen Abschnitt (14) umgebende Fase (15). Ferner betrifft die Erfindung ein Betätigungswerkzeug mit einem Betätigungsabschnitt, eine Verwendung und ein Formwerkzeug zur Herstellung eines Kraftangriffs oder eines Betätigungsabschnitts.

## Beschreibung

Die Erfindung betrifft ein Schraubelement mit einem Kraftangriff für ein Betätigungswerkzeug, wobei der Kraftangriff eine Mehrzahl von auf einem Umfang um eine Mittelachse verteilt angeordneten Vorsprüngen und Rücksprüngen aufweist. Die Vorsprünge und die Rücksprünge gehen abwechselnd ineinander über. Die Vorsprünge und die Rücksprünge sind gewölbt ausgebildet. Die Vorsprünge und die Rücksprünge erstrecken sich in einem Einführabschnitt jeweils parallel zur Mittelachse. Ferner betrifft die Erfindung ein Betätigungswerkzeug für ein Schraubelement, eine Verwendung sowie ein Formwerkzeug.

Schraubelemente mit Kraftangriff sind im Stand der Technik in einer Vielzahl von Ausgestaltungen bekannt. Der Begriff "Schraubelement" umfasst sämtliche schraubbaren Bauteile, wie zum Beispiel Schrauben, Muttern oder Bolzen. Im Stand der Technik sind unterschiedliche Ausführungen von Kraftangriffen bekannt, die es ermöglichen, ein Drehmoment effizient auf das Schraubelement zu übertragen. Übliche Formen umfassen Innensechskant- oder Außensechskantprofile sowie den so genannten Innensechsrund (auch bekannt unter dem Markennamen "TORX^{®}"), der sich durch eine sternförmige Kontur mit abgerundeten Ecken auszeichnet. Der Innensechsrund bietet insbesondere den Vorteil einer verbesserten Drehmomentübertragung und verringerten Abnutzung eines Betätigungswerkzeugs.

Trotz dieser Entwicklungen besteht jedoch weiterhin der Bedarf an alternativen Formen von Kraftangriffen, die eine noch effizientere Drehmomentübertragung, eine verbesserte Lebensdauer sowie gute Kompatibilität zu verschiedenen Betätigungswerkzeugen ermöglichen.

Der vorliegenden Erfindung liegt daher die Aufgabe zugrunde, ein Schraubelement und ein Betätigungswerkzeug anzugeben, die eine verbesserte Drehmomentübertragung bei bestmöglicher Kompatibilität mit bekannten Kraftangriffen gewährleisten.

Die vorgenannte Aufgabe wird bei einem gattungsgemäßen Schraubelement durch die Merkmale des kennzeichnenden Teils des Anspruchs 1 gelöst, nämlich dadurch, dass in einem Endbereich des Kraftangriffs ein kegelförmiger Abschnitt ausgebildet ist und dass sich zwischen dem kegelförmigen Abschnitt und dem Einführabschnitt eine den kegelförmigen Abschnitt umgebende Fase erstreckt.

Bei dem erfindungsgemäßen Schraubelement handelt es sich beispielsweise um eine Schraube, insbesondere eine Universalschraube oder eine Holzschraube, eine Mutter, einen Bolzen oder ein ähnliches Element, auf das mittels eines Kraftangriffs ein Drehmoment übertragbar ist. Von dem Begriff Schraubelement sollen auch solche Bauteile umfasst sein, die durch eine bewirkte Rotation eine Funktion erfüllen, beispielsweise Schließ- und Sperrventile. Der Kraftangriff ist beispielsweise als Innenprofil, also eindringend in das Schraubelement, oder als Außenprofil ausgebildet, steht also von dem Schraubelement hervor. Das zugehörige Betätigungswerkzeug ist vorteilhaft geometrisch kompatibel zu einem Innenprofil oder einem Außenprofil ausgebildet. Das Betätigungswerkzeug ist insbesondere komplementär zum Kraftangriff des Schraubelements ausgebildet.

Sofern das Schraubelement als Schraube ausgebildet ist, weist die Schraube vorzugsweise einen Schraubenkopf, einen mit dem Schraubenkopf verbundenen Schaft sowie eine Spitze auf. Der Schaft weist ein Gewinde auf, das sich zumindest teilweise oder vollständig entlang des Schafts erstreckt. Der Schraubenkopf geht vorzugsweise mit einer kegelförmigen Fläche in den Schaft oder einen Schaftvorsprung über. Der Schaftvorsprung ist zumindest teilweise zylindrisch ausgebildet und weist eine orthogonal zur Mittelachse ausgerichtete Stirnfläche auf. Vorzugsweise ist der Schaftvorsprung frei von einem Gewinde ausgebildet. Optional ist vorgesehen, dass der Schaft zumindest teilweise als Reibschaft ausgebildet ist.

Vorzugsweise ist vorgesehen, dass der Kraftangriff im Wesentlichen parallel zu einer Mittelachse des Schraubelements ausgerichtet ist. Gemäß einer bevorzugten Ausführungsform fällt eine Mittelachse des Schraubelements mit einer Mittelachse des Kraftangriffs zusammen.

Der Kraftangriff des Schraubelements weist eine Mehrzahl von auf einem Umfang um eine Mittelachse des Kraftangriffs, insbesondere um eine Mittelachse des Schraubelements, verteilt angeordneten Vorsprüngen und Rücksprüngen auf. Die Vorsprünge und die Rücksprünge sind entlang des Umfangs des Kraftelements abwechselnd zueinander angeordnet. Die Vorsprünge und die Rücksprünge gehen ineinander über. Ein Vorsprung und ein zu dem Vorsprung benachbarter Rücksprung gehen in einem Übergang ineinander über. Vorzugsweise ist der Übergang frei von Spitzen und Kanten ausgebildet. Insbesondere ist in dem Übergang eine Tangente zu dem Vorsprung identisch mit einer Tangente zu dem zu dem Vorsprung benachbarten Rücksprung.

Die Vorsprünge sind gewölbt ausgebildet, beispielsweise kreissegmentförmig oder ellipsensegmentförmig. Es ist ferner vorgesehen, dass die Rücksprünge gewölbt ausgebildet sind, beispielsweise kreissegmentförmig oder ellipsensegmentförmig. Auch kann einer oder mehrere der Vorsprünge und/oder einer oder mehrere der Rücksprünge eine gewölbte Form mit unregelmäßiger Krümmung aufweisen. Beispielsweise weisen die Vorsprünge und/oder die Rücksprünge in einer Ebene, zu der die Mittelachse eine Ebenennormale ist, einen Querschnitt auf, der konvex oder konkav in Bezug auf die Mittelachse gekrümmt ist. Insbesondere ist vorgesehen, dass die Vorsprünge kreissegmentförmig und die Rücksprünge kreissegmentförmig ausgebildet sind. Insbesondere ist der Kraftangriff als Innen- oder Außensechsrund ausgebildet.

Zweckmäßig ist vorgesehen, dass die Radien der den kreissegmentförmigen Vorsprüngen und der den kreissegmentförmigen Rücksprüngen zu Grunde liegenden Kreise unterschiedlich sind. Vorzugsweise weist ein kreissegmentförmig ausgebildeter Vorsprung einen kleineren Radius auf als ein kreissegmentförmig ausgebildeter Rücksprung. Auch ist es möglich, dass ein kreissegmentförmig ausgebildeter Vorsprung den gleichen Radius aufweist wie ein kreissegmentförmig ausgebildeter Rücksprung. Alternativ dazu ist vorgesehen, dass ein Radius der Vorsprünge identisch mit einem Radius eines Rücksprungs ist.

Die Vorsprünge und die Rücksprünge erstrecken sich in einem Einführabschnitt jeweils parallel zur Mittelachse. Toleranzabweichungen aufgrund des gewählten Herstellungsverfahrens bleiben bei dem erfindungsgemäßen Schraubelement unberücksichtigt. Vorzugsweise erstreckt sich jeder der Vorsprünge und jeder der Rücksprünge über den vollständigen Einführabschnitt hinweg parallel zur Mittelachse. In axialer Richtung sind die Vorsprünge und die Rücksprünge in dem Einführabschnitt insbesondere so ausgebildet, dass sowohl die Vorsprünge als auch die Rücksprünge frei von einer Neigung zur Mittelachse sind. Sind die Vorsprünge kreissegmentförmig ausgebildet, so weisen die Vorsprünge Hüllkreise auf, die in dem Einführabschnitt in axialer Richtung konstant sind. Wenn die Rücksprünge kreissegmentförmig ausgebildet sind, weisen die Rücksprünge Hüllkreise auf, die in axialer Richtung in dem Einführabschnitt konstant sind. Dadurch, dass sich die Vorsprünge und die Rücksprünge jeweils parallel zu der Mittelachse erstrecken, wird im Rahmen der Fertigungstoleranzen ein zuverlässiges Zusammenwirken von Schraubelement und Betätigungswerkzeug gewährleistet.

Der Kraftangriff weist einen Endbereich auf, in dem ein kegelförmiger Abschnitt angeordnet ist. Der Endbereich des Kraftangriffs ist z. B. bei einem Innenprofil an einem dem Einführabschnitt gegenüberliegenden Abschnitt des Kraftangriffs angeordnet. Bei einem Außenprofil ist der Endbereich an einem Einführabschnitt angeordnet.

Der kegelförmige Abschnitt ist insbesondere als Kegelspitze ausgebildet. Vorzugsweise ist vorgesehen, dass eine Spitze der Kegelspitze auf der Mittelachse angeordnet ist. Alternativ dazu ist insbesondere vorgesehen, dass der kegelförmige Abschnitt als Kegelstumpf ausgebildet ist. Hierbei ist es bevorzugt, dass eine gedachte Spitze des kegelförmigen Abschnitts auf der Mittelachse angeordnet ist.

Zur Vereinfachung der Herstellung des Schraubelementes ist insbesondere ferner vorgesehen, dass der kegelförmige Abschnitt eine geschlossene Umfangskontur aufweist. Bevorzugt ist der kegelförmige Abschnitt rotationssymmetrisch um die Mittelachse ausgebildet.

Alternativ dazu ist vorgesehen, dass in dem Endbereich des Kraftangriffs ein gewölbter Abschnitt angeordnet ist. Der gewölbte Abschnitt weist eine von einem Kegel verschiedene Hüllkurve auf. Beispielsweise ist vorgesehen, dass der gewölbte Abschnitt als Paraboloid oder als Paraboloidsegment ausgebildet ist. Das Paraboloid kann als Rotationsparaboloid oder als elliptisches Paraboloid ausgebildet sein. Ist in dem Endabschnitt des Kraftangriffs ein gewölbter Abschnitt angeordnet, so ist es bevorzugt, dass ein Scheitelpunkt eines gewölbten Abschnitts oder ein fiktiver Scheitelpunkt eines gewölbten Abschnitts auf der Mittelachse angeordnet ist. Insbesondere ist vorgesehen, dass, abgesehen von der Hüllkurve, der gewölbte Abschnitt genauso ausgebildet ist wie der kegelförmige Abschnitt, also die gleichen Merkmale aufweist.

Erfindungsgemäß ist ferner vorgesehen, dass sich zwischen dem kegelförmigen Abschnitt und dem Einführabschnitt eine den kegelförmigen Abschnitt umgebende Fase erstreckt. Es ist bevorzugt vorgesehen, dass die Fase den kegelförmigen Abschnitt zumindest abschnittsweise, bevorzugt vollständig, in Umfangsrichtung umgibt. Im Kontext mit der vorliegenden Erfindung umgibt die Fase den kegelförmigen Abschnitt dann, wenn die Fase zumindest teilweise an einem Umfangsabschnitt des kegelförmigen Abschnitts angeordnet ist. Insbesondere ist vorgesehen, dass der kegelförmige Abschnitt eine Grundfläche aufweist, die kleiner oder gleich einem minimalen Querschnitt der Fase ist, vorzugsweise, dass der kegelförmige Abschnitt nicht über die Fase hinaussteht.

Alternativ oder zusätzlich dazu ist insbesondere vorgesehen, dass eine fiktive Grundfläche, beispielsweise ein maximaler Durchmesser, der Fase kleiner oder gleich einer fiktiven Hüllkurve um die Vorsprünge ist, vorzugsweise dass die Fase nicht über die Vorsprünge hinaussteht. Die Fase weist vorzugsweise eine von dem kegelförmigen Abschnitt abweichende Neigung auf. Für eine gleichmäßige Kraftverteilung ist es insbesondere vorgesehen, dass die Fase rotationssymmetrisch um die Mittelachse ausgebildet ist.

Die Erfindung weist gegenüber Schraubelementen mit bekannten Kraftangriffen den Vorteil auf, dass sich eine Eindringtiefe eines Betätigungswerkzeugs in den Kraftangriff oder des Kraftangriffs in ein Betätigungswerkzeug beeinflussen lässt. Durch den kegelförmigen Abschnitt mit der umgebenden Fase wird beispielsweise ein Betätigungswerkzeug vorteilhaft in den Kraftangriff eingeführt und zentriert. Wenn beispielsweise die Vorsprünge und Rücksprünge in Form eines Innensechsrunds ausgebildet sind, besteht eine vorteilhafte Kompatibilität des Kraftangriffs mit Betätigungswerkzeugen mit Außensechsrundprofil bzw. T-Star^{®} plus-Profil.

Gemäß einer Ausgestaltung des Schraubelementes ist vorgesehen, dass sich die den kegelförmigen Abschnitt umgebende Fase mit den Vorsprüngen und/oder mit den Rücksprüngen schneidet. Insbesondere ist vorgesehen, dass sich die den kegelförmigen Abschnitt umgebende Fase zumindest teilweise oder vollständig mit den Vorsprüngen und mit den Rücksprüngen schneidet. Vorzugsweise geht die Fase in die Vorsprünge und gegebenenfalls die Rücksprünge über. Es ist insbesondere vorgesehen, dass die Fase eine Begrenzung der Vorsprünge und/oder der Rücksprünge in axialer Richtung darstellt.

Besonders bevorzugt ist vorgesehen, dass die Fase einen ersten, insbesondere kegelstumpfförmigen, Abschnitt aufweist, der sich mit den Vorsprüngen und den Rücksprüngen schneidet, und dass die Fase mindestens einen zweiten, insbesondere kegelstumpfförmigen, Abschnitt aufweist, der nicht von den Rücksprüngen oder Vorsprüngen geschnitten wird. Vorzugsweise wird der zweite Abschnitt in axialer Richtung durch einen Scheitelkreis, auf dem alle Scheitelpunkte der Vorsprünge oder Rücksprünge liegen und durch eine Grundfläche des kegelförmigen Abschnitts begrenzt. Bevorzugt ist vorgesehen, dass sich der zweite Abschnitt unmittelbar an den kegelförmigen Abschnitt anschließt.

Dadurch, dass sich bevorzugt die Vorsprünge und die Rücksprünge des Kraftangriffs bis zur Fase erstrecken, ist die Wirkfläche des Kraftangriffs für die Kraftübertragung für ein Betätigungswerkzeug im Vergleich zu bekannten Kraftangriffen um bis zu etwa 20 % gesteigert. Zudem steigert die Fase vorteilhaft die Standzeit eines Betätigungswerkzeugs, indem der Cam-out-Effekt reduziert wird.

Besonders bevorzugt ist vorgesehen, dass die Fase unmittelbar an den Einführabschnitt angrenzt. Aufgrund der Kombination eines kegelförmigen Abschnitts in einem Endbereich des Kraftangriffs und einer den kegelförmigen Abschnitt umgebenden Fase, die die Vorsprünge und/oder die Rücksprünge schneidet, kann auch von einer doppelfasigen Spitze des Kraftangriffs gesprochen werden. Durch diesen vorteilhaften, doppelfasigen Aufbau wird also die Wirkfläche zwischen Kraftangriff und Betätigungswerkzeug vergrößert, was die übertragbaren Drehmomente steigert.

Als vorteilhaft hat sich gemäß einer weiteren Ausgestaltung herausgestellt, wenn vorgesehen ist, dass die den kegelförmigen Abschnitt umgebende Fase in den kegelförmigen Abschnitt mündet. Die Fase ist somit unmittelbar benachbart zu dem kegelförmigen Abschnitt angeordnet. Eine derartige Ausgestaltung ermöglicht es, den für den Kraftangriff benötigten Bauraum zu optimieren.

Eine weitere Ausgestaltung des Schraubelementes sieht vor, dass ein Fasenwinkel, den die Fase mit der Mittelachse einschließt, kleiner ist als ein Kegelwinkel, den der kegelförmige Abschnitt mit der Mittelachse des Kraftangriffs einschließt. Insbesondere ist vorgesehen, dass sich der Fasenwinkel zwischen einer Außenfläche der Fase und der Mittelachse erstreckt.

Alternativ oder zusätzlich dazu ist vorgesehen, dass sich der Kegelwinkel zwischen einer Außenfläche des kegelförmigen Abschnitts und der Mittelachse des Kraftangriffs erstreckt. Dadurch, dass der Fasenwinkel kleiner als der Kegelwinkel ist, ist die Fase stärker geneigt als der kegelförmige Abschnitt, wodurch die Wirkfläche des Kraftangriffs für die Kraftübertragung für ein Betätigungswerkzeug verbessert wird. Vorzugsweise beträgt der Fasenwinkel zwischen 30° und 60°, bevorzugt zwischen 40° und 50°, weiter bevorzugt etwa 45°. Insbesondere beträgt der Kegelwinkel zwischen 55° und 85°, bevorzugt zwischen 65° und 75°, besonders bevorzugt etwa 70°.

Alternativ zu dem vorangehenden Ausführungsbeispiel ist vorgesehen, dass die Fase mindestens einen ersten Fasenabschnitt und mindestens einen zweiten Fasenabschnitt aufweist. Der erste Fasenabschnitt schließt mit der Mittelachse insbesondere einen ersten Fasenwinkel und der zweite Abschnitt schließt mit der Mittelachse insbesondere einen zweiten Fasenwinkel ein. Vorzugsweise geht der erste Fasenabschnitt in den kegelförmigen Abschnitt und der zweite Fasenabschnitt in den Einführabschnitt über. Der erste Fasenwinkel und der zweite Fasenwinkel sind unterschiedlich. Insbesondere ist der erste Fasenwinkel kleiner als der zweite Fasenwinkel, bevorzugt ist der zweite Fasenwinkel größer als doppelt so groß wie der erste Fasenwinkel. Beispielsweise beträgt der erste Fasenwinkel weniger als 30°, insbesondere weniger als 29°, vorzugsweise weniger als 28°. Es ist insbesondere vorgesehen, dass der erste Fasenwinkel zwischen 25° und 28°, insbesondere genau 28°, beträgt. Beispielweise beträgt der zweite Fasenwinkel mehr als 60°, insbesondere mehr als 62°, vorzugsweise mehr als 63°. Es ist insbesondere vorgesehen, dass der zweite Fasenwinkel zwischen 62° und 68°, insbesondere genau 62°, beträgt.

Vorzugsweise ist vorgesehen, dass eine Länge des ersten Fasenabschnitts entlang der Mittelachse länger als eine Länge des zweiten Fasenabschnitts entlang der Mittelachse ist.

Beispielsweise ist ferner vorgesehen, dass die Fase ferner mindestens einen dritten Fasenabschnitt und mindestens einen vierten Fasenabschnitt aufweist. Der dritte Fasenabschnitt schließt mit der Mittelachse einen dritten Fasenwinkel und der vierte Fasenabschnitt mit der Mittelachse einen vierten Fasenwinkel ein. Der dritte Fasenwinkel und der vierte Fasenwinkel sind unterschiedlich. Vorzugsweise sind der erste Fasenwinkel und der dritte Fasenwinkel und/oder der zweite Fasenwinkel und der vierte Fasenwinkel gleich. Bevorzugt ist vorgesehen, dass auf den kegelförmigen Abschnitt der erste Fasenabschnitt, anschließend der zweite Fasenabschnitt, anschließend der dritte Fasenabschnitt, anschließend der vierte Fasenabschnitt und dann der Einführabschnitt folgt.

Insbesondere ist der dritte Fasenwinkel kleiner als der vierte Fasenwinkel, bevorzugt ist der vierte Fasenwinkel größer als doppelt so groß als der dritte Fasenwinkel. Beispielsweise beträgt der dritte Fasenwinkel weniger als 30°, insbesondere weniger als 29°, vorzugsweise weniger als 28°. Es ist insbesondere vorgesehen, dass der dritte Fasenwinkel zwischen 25° und 28°, insbesondere genau 28° beträgt. Beispielweise beträgt der vierte Fasenwinkel mehr als 60°, insbesondere mehr als 62°, vorzugsweise mehr als 63°. Es ist insbesondere vorgesehen, dass der vierte Fasenwinkel zwischen 62° und 68°, insbesondere genau 62° beträgt.

Bei diesem Ausführungsbeispiel ist die Fase insbesondere mindestens einstufig, vorzugsweise zweistufig ausgebildet. Dieses Ausführungsbeispiel weist gegenüber dem Stand der Technik den Vorteil auf, dass die Kompatibilität mit bekannten Kraftangriffen weiter gesteigert wird.

Eine weitere Ausgestaltung des Schraubelements sieht insbesondere vor, dass die Fase zumindest teilweise konkav oder konvex gekrümmt ausgebildet ist. Die Fase, die sich zwischen dem Einführabschnitt und dem kegelförmigen Abschnitt erstreckt, ist vorzugsweise im Querschnitt über einen Teil ihrer Erstreckung entlang der Längsachse, insbesondere über die vollständige Erstreckung, konvex und/oder konkav gewölbt ausgebildet. Eine derartige Fase lässt sich vorteilhaft herstellen. Insbesondere ist vorgesehen, dass die Fase mindestens zwei Fasenabschnitte mit konkaver oder/oder konvexer Krümmung aufweist. Vorzugsweise ist vorgesehen, dass die konvexe oder konkave Krümmung durch kreisförmig, bogenförmig oder splineförmig gekrümmte Bereiche gebildet ist. Kreisförmig gekrümmte Bereiche weisen einen konstanten Radius auf.

Als vorteilhaft hat es sich zudem herausgestellt, wenn gemäß einer weiteren Ausführung vorgesehen ist, dass eine maximale Länge der Fase entlang der Mittelachse größer ist als eine maximale Länge des kegelförmigen Abschnitts entlang der Mittelachse. Eine Länge entlang einer Mittelachse entspricht einer Längserstreckung, die parallel zu der Mittelachse gemessen wird. Bevorzugt ist vorgesehen, dass die maximale Länge der Fase entlang der Mittelachse mindestens 1,2-mal, vorzugsweise mindestens 1,5-mal, bevorzugt mindestens doppelt so groß ist wie die maximale Länge des kegelförmigen Abschnitts entlang der Mittelachse. Durch dieses Verhältnis ergibt sich eine vorteilhafte Dimensionierung des Kraftangriffs.

In Abhängigkeit von der Ausgestaltung des Kraftangriffs als Innenprofil oder als Außenprofil ist zur Verbesserung der Kraftübertragung in den Einführabschnitt vorgesehen, dass eine maximale Länge eines der Rücksprünge oder eine maximale Länge eines der Vorsprünge entlang der Mittelachse größer ist als eine maximale Länge der Fase entlang der Mittelachse. Insbesondere wenn der Kraftangriff als Innenprofil ausgebildet ist, ist eine maximale Länge der Rücksprünge entlang der Mittelachse größer als eine maximale Länge der Fase entlang der Mittelachse. Vorzugsweise ist eine maximale Länge aller Rücksprünge und/oder aller Vorsprünge entlang der Mittelachse größer als eine maximale Länge der Fase entlang der Mittelachse. Insbesondere ist vorgesehen, dass die maximale Länge eines oder aller Rücksprünge, beziehungsweise eines oder aller Vorsprünge, entlang der Mittelachse 1,5-mal, vorzugsweise 1,6-mal, bevorzugt mindestens doppelt so groß ist wie die maximale Länge der Fase entlang der Mittelachse. Insbesondere ist eine maximale Länge des Einführabschnitts entlang der Mittelachse länger als die maximale Erstreckung der Fase entlang der Mittelachse. Insbesondere ist der Einführabschnitt entlang der Mittelachse mindestens doppelt so lang wie die Fase und/oder der kegelförmige Abschnitt.

Ein ausgewogenes Verhältnis von einer Eindringtiefe des Betätigungswerkzeuges in den Kraftangriff oder des Kraftangriffs in ein Betätigungswerkzeug und einem kompakten Bauraum wird erreicht, wenn abhängig davon, ob der Kraftangriff als Innenprofil oder als Außenprofil ausgebildet ist, insbesondere vorgesehen ist, dass sich die Fase entlang der Mittelachse in Verlängerung eines der Vorsprünge, insbesondere eines Scheitelpunkts eines der Vorsprünge, erstreckt und/oder dass sich die Fase entlang der Mittelachse in Verlängerung eines der Rücksprünge, insbesondere eines Scheitelpunkts eines der Rücksprünge, erstreckt.

Insbesondere wenn der Kraftangriff als Innenprofil ausgebildet ist, kann eine Länge der Fase in Verlängerung eines der Vorsprünge kleiner als eine maximale Länge der Fase entlang der Mittelachse sein. Als vorteilhaft hat sich herausgestellt, wenn die axiale Länge der Fase entlang der Mittelachse in Verlängerung eines der Vorsprünge oder eines der Rücksprünge an einem Scheitelpunkt des entsprechenden Vorsprungs oder des entsprechenden Rücksprungs angeordnet ist. Beispielsweise ist die Länge der Fase entlang der Mittelachse in Verlängerung eines der Vorsprünge oder eines der Rücksprünge eine minimale Länge der Fase entlang der Mittelachse.

Beispielsweise ist vorgesehen, dass die Länge der Fase entlang der Mittelachse in Verlängerung der Vorsprünge oder der Rücksprünge zwischen 5 % und 25 % einer maximalen Erstreckung der Fase entlang der Mittelachse beträgt. Alternativ oder zusätzlich ist vorgesehen, dass die Länge der Fase entlang der Mittelachse höchstens 25 %, vorzugsweise höchstens 20 %, bevorzugt höchstens 15 %, weiter bevorzugt höchstens 10 %, einer maximalen Länge der Fase entlang der Mittelachse beträgt. Beispielsweise erstreckt sich der erste Fasenabschnitt zumindest teilweise in axialer Verlängerung der Vorsprünge oder der Rücksprünge.

Gemäß einer weiteren Ausgestaltung des Schraubelementes ist vorgesehen, dass ein Durchmesser des kegelförmigen Abschnitts kleiner als ein Scheitelkreis ist, wobei auf dem Scheitelkreis die Scheitelpunkte aller Vorsprünge oder Rücksprünge angeordnet sind. Vorzugsweise beträgt der Durchmesser des kegelförmigen Abschnitts etwa 70 % bis 95 %, insbesondere 80 %, oder vorzugsweise zwischen 90 % und 94 %, insbesondere 92 % des Durchmessers des Scheitelkreises. Der Durchmesser des kegelförmigen Abschnitts ist insbesondere ein Durchmesser einer Grundfläche des kegelförmigen Abschnitts oder der maximale Durchmesser des kegelförmigen Abschnitts. Vorzugsweise ist vorgesehen, dass der Scheitelkreis in einer Scheitelebene angeordnet ist, die entlang der Mittelachse zu einer Ebene beabstandet ist, in der die größte Fläche des kegelförmigen Abschnitts liegt. Beispielsweise beträgt der Abstand der Scheitelebene und der Ebene etwa der Hälfte der maximalen Erstreckung des kegelförmigen Abschnitts entlang der Mittelachse.

Als besonders vorteilhaft hat sich gemäß einer weiteren Ausgestaltung herausgestellt, wenn vorgesehen ist, dass jeder der Vorsprünge gleich ausgebildet ist und/oder dass jeder der Rücksprünge gleich ausgebildet ist. Insbesondere ist es von Vorteil, wenn der Kraftangriff symmetrisch zu einer Symmetrieachse ausgebildet ist. Vorzugsweise fällt die Symmetrieachse mit der Mittelachse des Kraftangriffs und/oder der Mittelachse des Schraubelements zusammen. Beispielsweise ist vorgesehen, dass der Kraftangriff drehsymmetrisch zu der Symmetrieachse ausgebildet ist.

Ein Einbringen oder Aufsetzen eines Betätigungswerkzeugs in beliebiger Ausrichtung in bzw. auf den Kraftangriff wird erreicht, wenn vorgesehen ist, dass der Kraftangriff mindestens oder genau vier, mindestens oder genau fünf, mindestens oder genau sechs Vorsprünge und/oder mindestens oder genau vier, mindestens oder genau fünf, mindestens oder genau sechs Rücksprünge aufweist. Die Vorsprünge und die Rücksprünge sind gleichmäßig, die Mittelachse des Kraftangriffs umgebend, angeordnet. Dadurch kann beispielsweise ein Betätigungswerkzeug in beliebiger Ausrichtung in den Kraftangriff eingebracht bzw. auf den Kraftangriff aufgesetzt werden.

Die Erfindung betrifft ferner ein Betätigungswerkzeug für ein Schraubelement mit einem Kraftangriff, beispielsweise nach einem der beschriebenen Ausführungsbeispiele. Das Betätigungswerkzeug weist mindestens einen Betätigungsabschnitt mit einer Mehrzahl von auf einem Umfang um eine Mittelachse angeordneten Vorsprüngen und Rücksprüngen auf. Die Vorsprünge und die Rücksprünge gehen abwechselnd ineinander über. Die Vorsprünge und die Rücksprünge sind gewölbt ausgebildet. Ferner erstrecken sich die Vorsprünge und die Rücksprünge in einem Einführabschnitt jeweils parallel zur Mittelachse.

Das Betätigungswerkzeug zeichnet sich dadurch aus, dass in einem Endbereich des Kraftangriffs ein kegelförmiger Abschnitt angeordnet ist, und dass sich zwischen dem kegelförmigen Abschnitt und dem Einführabschnitt eine den kegelförmigen Abschnitt umgebende Fase erstreckt. Das Betätigungswerkzeug ist vorzugsweise komplementär zu dem beschriebenen Schraubelement mit Kraftangriff ausgebildet.

Wenn der Kraftangriff des Schraubelementes als Innenprofil ausgebildet ist, so ist der Betätigungsabschnitt des Betätigungswerkzeugs als Außenprofil ausgebildet, und umgekehrt. Insoweit gelten die beschriebenen Merkmale des Schraubelementes gleichermaßen für das Betätigungswerkzeug, so dass auf die beschriebenen Merkmale und Ausgestaltungen Bezug genommen wird. Insbesondere weist das erfindungsgemäße Betätigungswerkzeug durch die Fase eine verbesserte Lebensdauer oder Standzeit auf. Insbesondere weist das Betätigungswerkzeug zumindest einen ersten und einen zweiten Fasenabschnitt mit einem ersten Fasenwinkel und einem zweiten Fasenwinkel auf.

Um ein Zusammenwirken von Betätigungswerkzeug und Schraubelement zu vereinfachen, ist vorgesehen, dass die Vorsprünge des Schraubelementes den Rücksprüngen des Betätigungswerkzeugs entsprechen, und dass die Rücksprünge des Schraubelementes den Vorsprüngen des Betätigungswerkzeuges entsprechen.

An einem dem Endbereich des Kraftangriffs gegenüberliegenden Übergang des Einführabschnitts zu einem Befestigungs- oder Griffabschnitt können die Vorsprünge und/oder die Rücksprünge geneigt zur Mittelachse angeordnet sein. Dadurch ist es möglich, die Herstellung des Betätigungswerkzeugs zu vereinfachen.

Alternativ zu dem kegelförmigen Abschnitt ist vorgesehen, dass das Betätigungswerkzeug anstelle eines kegelförmigen Abschnitts einen gewölbten Abschnitt aufweist.

Die Erfindung betrifft ferner ein Schraubsystem, dass mindestens ein Schraubelement mit den Merkmalen eines der beschriebenen Ausführungsbeispiele und mindestens ein Betätigungswerkzeug mit den Merkmalen eines der beschriebenen Ausführungsbeispiele aufweist. Vorzugsweise sind der Kraftangriff und der Betätigungsabschnitt derart ausgebildet, dass der kegelförmige Abschnitt des Betätigungswerkzeugs im kegelförmigen Abschnitt des Kraftangriffs anliegt, wenn der Betätigungsabschnitt vollständig eingebracht ist und/oder dass die Fase des Betätigungswerkzeugs an der Fase des Kraftangriffs anliegt.

Zudem betrifft die Erfindung die Verwendung eines Profils mit einer Mehrzahl von auf einem Umfang um eine Mittelachse verteilt angeordneten Vorsprüngen und Rücksprüngen. Die Vorsprünge und die Rücksprünge gehen abwechselnd ineinander über. Die Vorsprünge und die Rücksprünge sind gewölbt ausgebildet. Ferner erstrecken sich die Vorsprünge und die Rücksprünge in einem Einführabschnitt jeweils parallel zur Mittelachse. In einem Endbereich ist ein kegelförmiger Abschnitt angeordnet. Zwischen dem kegelförmigen Abschnitt und dem Einführabschnitt erstreckt sich eine den kegelförmigen Abschnitt umgebende Fase. Dieses Profil wird als Kraftangriff für ein Schraubelement oder als Betätigungsabschnitt für ein Betätigungswerkzeug verwendet. Zur Ausgestaltung des Profils im Rahmen des Schraubelementes oder des Betätigungswerkzeugs wird auf die beschriebenen Merkmale und Ausführungsbeispiele verwiesen.

Abschließend betrifft die Erfindung ein Formwerkzeug zur Herstellung eines Kraftangriffs eines Schraubelementes oder eines Betätigungsabschnitts eines Betätigungswerkzeuges, insbesondere nach einem der beschriebenen Ausführungsbeispiele. Vorzugsweise ist der Kraftangriff oder der Betätigungsabschnitt als Innenprofil oder als Außenprofil mit der beschriebenen Form ausgebildet. Dazu weist das Formwerkzeug eine Mehrzahl von auf einem Umfang um eine Mittelachse verteilt angeordneten Vorsprüngen und Rücksprüngen auf. Die Vorsprünge und die Rücksprünge gehen abwechselnd ineinander über. Die Vorsprünge und die Rücksprünge sind gewölbt ausgebildet. Sowohl die Vorsprünge als auch die Rücksprünge erstrecken sich in einem Einführabschnitt parallel zu der Mittelachse. In einem Endbereich des Kraftangriffs ist ein kegelförmiger Abschnitt angeordnet und zwischen dem kegelförmigen Abschnitt und dem Einführabschnitt erstreckt sich eine den kegelförmigen Abschnitt umgebende Fase.

Zu einer Ausgestaltung des Formwerkzeugs wird auf die beschriebenen Ausführungsbeispiele des Kraftangriffs des Schraubelementes bzw. des Betätigungsabschnitts des Betätigungswerkzeuges sowie deren Merkmale verwiesen, die explizit auch für das Formwerkzeug gelten. Das Formwerkzeug ist so ausgebildet und eingerichtet, dass es die beschriebenen Kraftangriffe bzw. Betätigungsabschnitte herstellen kann.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Schraubelementes in perspektivischer Ansicht,
- Fig. 2: das Ausführungsbeispiel eines Schraubelementes gemäß Fig. 1 im Schnitt entlang der Mittelachse,
- Fig. 3: ein Ausführungsbeispiel eines Systems aus einem Schraubelement mit einem Betätigungswerkzeug,
- Fig. 4: ein weiteres Ausführungsbeispiel eines Systems aus einem Schraubelement und einem Betätigungswerkzeug
- Fig. 5a: ein weiteres Ausführungsbeispiel eines Schraubelementes im Schnitt entlang der Mittelachse,
- Fig. 5b: das Ausführungsbeispiel eines Schraubelementes gemäß Fig. 5a in einer Draufsicht,
- Fig. 6a: ein weiteres Ausführungsbeispiel eines Schraubelementes im teilweisen Schnitt entlang der Mittelachse,
- Fig. 6b: das Ausführungsbeispiel eines Schraubelementes gemäß Fig. 6a in einer Draufsicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

In den dargestellten Figuren sind die axiale Richtung A, die radiale Richtung R und die Umfangsrichtung U als bidirektionale Richtungen ausgebildet, wobei aus Gründen der Übersichtlichkeit lediglich eine Richtung mit einem Pfeil versehen ist. Ferner erstreckt sich die axiale Richtung A orthogonal zu der radialen Richtung R und parallel zu einer Mittelachse M, M'.

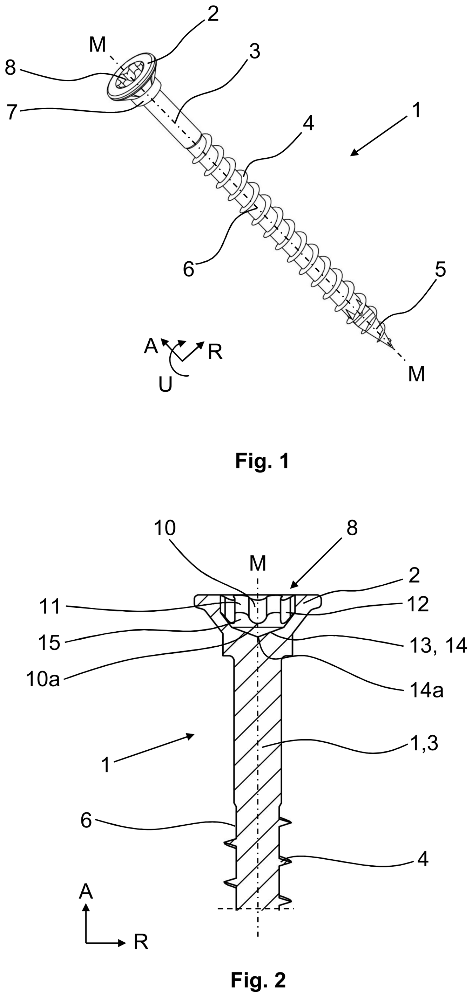

Fig. 1 zeigt ein Ausführungsbeispiel eines Schraubelementes 1 in perspektivischer Ansicht. Bei diesem Ausführungsbeispiel ist das Schraubelement 1 als Universalschraube ausgebildet. Das Schraubelement 1 weist einen Schraubenkopf 2, einen Schaft 3, ein Gewinde 4 sowie eine Schraubenspitze 5 auf. Ein Gewindegrund 6 des Gewindes 4 hat einen geringeren Durchmesser als der Schaft 3. Bei diesem Ausführungsbeispiel ist im Übergang zwischen Schraubenkopf 2 und Schaft 3 ein im Wesentlichen zylindrischer Schaftvorsprung 7 ausgebildet. Der Schaftvorsprung 7 schließt sich unmittelbar an den Schraubenkopf 2 an.

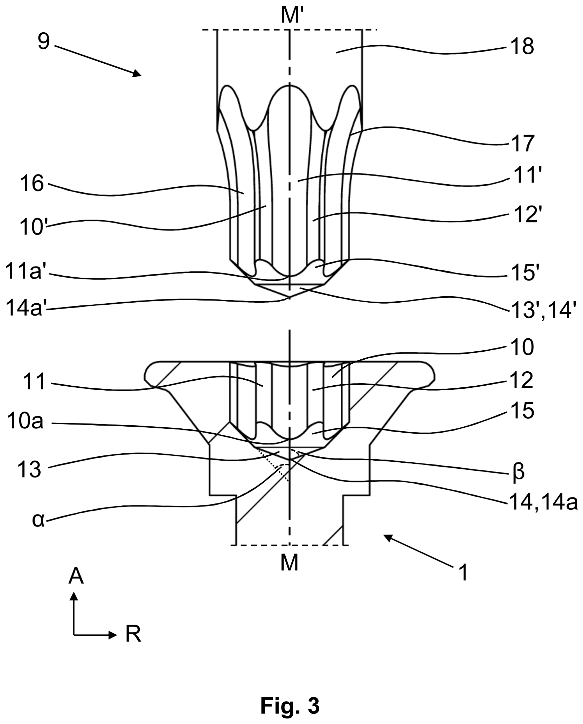

Das Schraubelement 1 weist einen Kraftangriff 8 auf, der im Detail in einer Schnittansicht entlang einer Mittelachse M des Kraftangriffs 8 in den Fig. 2 und 3 dargestellt ist. Die Mittelachse M des Kraftangriffs 8 fällt mit einer Mittelachse des Schraubelements 1 zusammen. Der Kraftangriff 8 dient dem Zusammenwirken mit einem Betätigungswerkzeug 9, das beispielhaft in Fig. 3 dargestellt ist.

Der Kraftangriff 8 des Schraubelements 1 weist eine Mehrzahl von auf einem Umfang um die Mittelachse M verteilt und abwechselnd angeordneten Vorsprüngen 10 und Rücksprüngen 11 auf. Die Vorsprünge 10 und Rücksprünge 11 gehen abwechselnd ineinander über. Ferner sind die Vorsprünge 10 und Rücksprünge 11 gewölbt ausgebildet. Die Vorsprünge 10 sind zu der Mittelachse M konvex und die Rücksprünge 11 konkav gewölbt.

Die Vorsprünge 10 und Rücksprünge 11 erstrecken sich in einem Einführabschnitt 12 jeweils parallel zur Mittelachse M. Keiner der Vorsprünge 10 und keiner der Rücksprünge 11 weist eine Neigung zur Mittelachse M auf. Ein gedachter Hüllkreis an den Scheitelpunkten der Vorsprünge 10 weist entlang der axialen Richtung A einen konstanten Durchmesser auf. Ein gedachter Hüllkreis um die Rücksprünge 11 weist entlang der axialer Richtung A in dem Einführabschnitt 12 ebenfalls einen konstanten Durchmesser auf.

Der Kraftangriff 8 weist einen Endbereich 13 auf, der insbesondere gegenüberliegend zu dem Einführabschnitt 12 angeordnet ist. In dem Endbereich 13 ist ein kegelförmiger Abschnitt 14 angeordnet, der als Kegelspitze ausgebildet ist. Eine Spitze 14a der Kegelspitze ist auf der Mittelachse M angeordnet. Ferner weist der kegelförmige Abschnitt 14 eine geschlossene Umfangskontur auf und ist rotationssymmetrisch zur Mittelachse M ausgebildet.

Zwischen dem kegelförmigen Abschnitt 14 und dem Einführabschnitt 12 ist eine Fase 15 angeordnet. Die Fase 15 umgibt den kegelförmigen Abschnitt 14 in Umfangsrichtung U vollständig. Die Fase 15 weist eine Neigung auf, die von einer Neigung des kegelförmigen Abschnitts 14 abweicht. Insbesondere schließt die Fase 15 mit der Mittelachse M einen kleineren Winkel als der kegelförmige Abschnitt 14 ein. Die Fase 15 ist rotationssymmetrisch um die Mittelachse M ausgebildet.

Dadurch, dass der kegelförmige Abschnitt 14 in dem Endbereich 13 des Kraftangriffs 8 mit einer den kegelförmigen Abschnitt 14 umgebenden Fase 15 kombiniert ist, weist der Kraftangriff eine doppelfasige Spitze auf. Die Oberflächen der Vorsprünge 10 und Rücksprünge 11 sind bei dem Schraubelement 1 auf ihrer gesamten Länge bis zur Fase 15 parallel zur Mittelachse M ausgerichtet. Insbesondere liegen alle Scheitelpunkte der Vorsprünge 10 und Rücksprünge 11 jeweils auf einer gedachten Geraden, die parallel zur Mittelachse M ausgerichtet ist.

Der kegelförmige Abschnitt 14 steht in radialer Richtung nicht über die Fase 15 hervor. Die den kegelförmigen Abschnitt 14 umgebende Fase 15 schneidet sowohl die Vorsprünge 10 als auch die Rücksprünge 11. Eine Erstreckung, die in axialer Richtung A in Richtung des Endbereiches 13 über die Schnittfläche der Fase 15 mit einem Vorsprung 10 hinausgeht, weist der Einführabschnitt 12 nicht auf. Auch enden die Rücksprünge 11 in axialer Richtung A in Richtung des Endbereiches 13 des Kraftangriffs 8 dort, wo die Fase 15 den entsprechenden Rücksprung 11 schneidet.

Während in Richtung des Einführabschnitts 12 die Fase 15 in den Einführabschnitt 12 übergeht, mündet die Fase 15 in Richtung des Endbereiches 13 des Kraftangriffs 8 in den kegelförmigen Abschnitt 14. Die Fase 15 ist somit unmittelbar benachbart zu dem Einführabschnitt 12 und unmittelbar benachbart zu dem kegelförmigen Abschnitt 14 angeordnet.

Die Fase 15, nämlich eine Außenfläche der Fase 15, schließt mit der Mittelachse M einen Fasenwinkel α ein, wie in Fig. 3 dargestellt. Ferner schließt die Mittelachse M mit dem kegelförmigen Abschnitt 14, nämlich mit einer Außenfläche des kegelförmigen Abschnitts 14, einen Kegelwinkel β ein. Der Fasenwinkel α ist kleiner als der Kegelwinkel β. Der Fasenwinkel α beträgt zwischen 40° und 50°, insbesondere etwa 45°. Der Kegelwinkel β beträgt zwischen 65° und 75°, insbesondere etwa 70°.

Eine maximale Länge der Fase 15 entlang der Mittelachse M ist größer als eine maximale Länge des kegelförmigen Abschnitts 14 entlang der Mittelachse M. Eine Länge entlang der Mittelachse M ist im vorliegenden Fall eine Längserstreckung in axialer Richtung A, die parallel zu der Mittelachse M gemessen ist. Ferner ist bei dem in den Fig. 1 und 2 gezeigten Schraubelement 1 eine maximale Länge der Rücksprünge 11 entlang der Mittelachse M größer als eine maximale Länge der Fase 15 entlang der Mittelachse M.

Insbesondere gemäß Fig. 3 erstreckt sich die Fase 15 in Verlängerung, insbesondere eines Scheitelpunktes 10a, der Vorsprünge 10 und mündet dann in den kegelförmigen Abschnitt. Eine Länge der Fase 15 entlang der Mittelachse M in Verlängerung der Vorsprünge 10, nämlich eines Scheitelpunktes 10a der Vorsprünge 10, ist geringer oder gleich 25 % der maximalen Länge der Fase 15 entlang der Mittelachse M (siehe Fig. 2 und 3). Die Fase 15 weist folglich einen ersten kegelstumpfförmigen Abschnitt auf, der sich mit den Vorsprüngen 10 und Rücksprüngen 11 schneidet und einen zweiten kegelstumpfförmigen Abschnitt, der nicht von den Vorsprüngen 10 und Rücksprüngen 11 geschnitten wird (gemäß Fig. 3 unterhalb und angrenzend an den kegelförmigen Abschnitt 14.

Die Scheitelpunkte 10a der Vorsprünge 10 sind auf einem Scheitelkreis angeordnet. Ein maximaler Durchmesser des kegelförmigen Abschnitts 14 ist kleiner als der Scheitelkreis und entspricht hier etwa 80 % des Durchmessers des Scheitelkreises. Der Scheitelkreis ist also etwas größer als der Durchmesser des kegelförmigen Abschnitts 14. Der Kraftangriff 8 weist bei diesem Ausführungsbeispiel genau sechs Vorsprünge 10 und sechs Rücksprünge 11 auf.

Fig. 3 zeigt ein Ausführungsbeispiel eines Betätigungswerkzeuges 9, das zum Zusammenwirken mit dem Schraubelement 1 mit einem Kraftangriff 8 ausgebildet ist. Zusammen bilden das Schraubelement 1 und das Betätigungswerkzeug 9 ein Schraubsystem.

Das Betätigungswerkzeug 9 weist einen Betätigungsabschnitt 16 auf. Der Betätigungsabschnitt 16 ist komplementär zum Kraftangriff 8 des Schraubelements 1 ausgebildet. Der Betätigungsabschnitt 16 weist eine Mehrzahl von auf einem Umfang um eine Mittelachse M' verteilt angeordneten Vorsprüngen 10' und Rücksprüngen 11' auf. Die Vorsprünge 10' des Betätigungswerkzeuges 9 sind komplementär zu den Rücksprüngen 11 des Schraubelements 1 ausgebildet. Die Rücksprünge 11' des Betätigungswerkzeuges 9 sind komplementär zu den Vorsprüngen 10 des Schraubelements 1 ausgebildet.

Die Vorsprünge 10' und die Rücksprünge 11' des Betätigungsabschnitts 16 gehen abwechselnd ineinander über. Dabei sind die Vorsprünge 10' und die Rücksprünge 11' gewölbt ausgebildet. In einem Einführabschnitt 12' erstrecken sich die Vorsprünge 10' und die Rücksprünge 11' parallel zu der Mittelachse M'. An einem Übergang 17 von dem Einführabschnitt 12' zu einem Befestigungsabschnitt 18 gehen die Vorsprünge 10' und die Rücksprünge 11' in einen Befestigungsabschnitt 18 über. Im Übergang 17 sind die Vorsprünge 10' und die Rücksprünge 11' gekrümmt ausgebildet und geneigt zu der Mittelachse M' ausgerichtet.

Da das Betätigungswerkzeug 9 komplementär zu dem Schraubelement 1 mit dem Kraftangriff 8 ausgebildet ist, ist eine maximale Länge der Vorsprünge 10' entlang der Mittelachse M' größer als eine maximale Länge der Fase 15' entlang der Mittelachse M'. Ferner erstreckt sich die Fase 15' in Verlängerung der Rücksprünge 11', hier in Verlängerung der Scheitelpunkte 11a' der Rücksprünge 11'. Die Fase 15' weist einen ersten kegelstumpfförmigen Abschnitt auf, der sich mit den Vorsprüngen 10' und Rücksprüngen 11' schneidet, sowie einen zweiten kegelstumpfförmigen Abschnitt, der sich nicht mit den Vorsprüngen 10' und Rücksprüngen 11' schneidet und dann in den kegelförmigen Abschnitt 14' übergeht. Eine Länge der Fase 15' entlang der Mittelachse M' in Verlängerung der Rücksprünge 11', hier in Verlängerung von der Scheitelpunkte 11a' der Rücksprünge 11', beträgt höchstens 25 % einer maximalen Länge der Fase 15' entlang der Mittelachse M'.

Ein Durchmesser des kegelförmigen Abschnitts 14' ist kleiner als ein Durchmesser eines Scheitelkreises, auf dem die Scheitelpunkte 11a' aller Rücksprünge 11' liegen und entspricht etwa 92 % des Durchmessers des Scheitelkreises. Der Durchmesser des Scheitelkreises ist etwas größer als der Durchmesser des kegelförmigen Abschnitts 14'. Auch bei diesem Ausführungsbeispiel ist der Durchmesser des kegelförmigen Abschnitts 14' der Durchmesser einer Grundfläche des kegelförmigen Abschnitts 14' bzw. der maximale Durchmesser des kegelförmigen Abschnitts 14'.

Sowohl der Kraftangriff 8 gemäß dem in Fig. 1 bis 3 dargestellten Ausführungsbeispiel als auch der Betätigungsabschnitt 16 gemäß dem in Fig. 3 dargestellten Ausführungsbeispiel eines Betätigungswerkzeuges 9 weisen eine doppelfasige Spitze auf. Wird das Betätigungswerkzeug 9 gemäß Fig. 3 mit seinem Betätigungsabschnitt 16 vollständig in den Kraftangriff 8 des Schraubelements 1 eingebracht, liegt der kegelförmige Abschnitt 14' an dem kegelförmigen Abschnitt 14 des Kraftangriffs 8 und die Fase 15' des Betätigungsabschnitts 16 an der Fase 15 des Kraftangriffs 8 an. Zudem wirken die Vorsprünge 10' und die Rücksprünge 11 sowie die Rücksprünge 11' und die Vorsprünge 10 zusammen, um ein Drehmoment um die Mittelachse M zu übertragen.

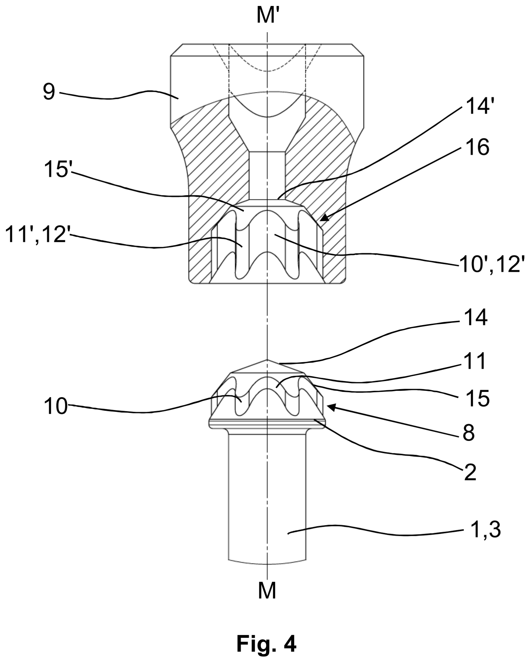

Fig. 4 zeigt ein weiteres Ausführungsbeispiel eines Betätigungswerkzeuges 9, das zum Zusammenwirken mit dem Schraubelement 1 mit einem Kraftangriff 8 ausgebildet ist. Zusammen bilden das Schraubelement 1 und das Betätigungswerkzeug 9 ein Schraubsystem. Der Betätigungsabschnitt 16 des Betätigungswerkzeugs 9 ist als Innenprofil ausgebildet, der Kraftangriff 8 des Schraubelements 1 als Außenprofil.

Der Betätigungsabschnitt 16 ist komplementär zum Kraftangriff 8 des Schraubelements 1 ausgebildet. Der Betätigungsabschnitt 16 weist eine Mehrzahl von auf einem Umfang um eine Mittelachse M' verteilt angeordneten Vorsprüngen 10' und Rücksprüngen 11' auf. Die Vorsprünge 10' des Betätigungswerkzeuges 9 sind komplementär zu den Rücksprüngen 11 des Schraubelements 1 ausgebildet. Die Rücksprünge 11' des Betätigungswerkzeuges 9 sind komplementär zu den Vorsprüngen 10 des Schraubelements 1 ausgebildet.

Die Vorsprünge 10' und die Rücksprünge 11' des Betätigungsabschnitts 16 gehen abwechselnd ineinander über. In einem Einführabschnitt 12' erstrecken sich die Vorsprünge 10' und die Rücksprünge 11' parallel zu der Mittelachse M'.

Eine Fase 15' erstreckt sich in einem Endbereich in Verlängerung der Vorsprünge 10'. Die Fase 15' weist einen ersten kegelstumpfförmigen Abschnitt auf, der sich mit den Vorsprüngen 10' und Rücksprüngen 11' schneidet, sowie einen zweiten kegelstumpfförmigen Abschnitt, der sich nicht mit den Vorsprüngen 10' und Rücksprüngen 11' schneidet und dann in den ebenfalls kegelstumpfförmigen Abschnitt 14' übergeht. Eine Länge der Fase 15' entlang der Mittelachse M' in Verlängerung der Vorsprünge 10' beträgt höchstens 25 % einer maximalen Länge der Fase 15' entlang der Mittelachse M'.

Ein maximaler Durchmesser des kegelstumpfförmigen Abschnitts 14' ist kleiner als ein Durchmesser eines Scheitelkreises, auf dem die Scheitelpunkte aller Vorsprünge 10' liegen und entspricht etwa 92 % des Durchmessers des Scheitelkreises. Der Durchmesser des Scheitelkreises ist etwas größer als der maximale Durchmesser des kegelförmigen Abschnitts 14'.

Der Kraftangriff 8 gemäß dem in Fig. 4 dargestellten Ausführungsbeispiel weist eine doppelfasige Spitze auf. Wird das Betätigungswerkzeug 9 gemäß Fig. 4 mit seinem Betätigungsabschnitt 16 vollständig auf den Kraftangriff 8 des Schraubelements 1 aufgebracht, liegt der kegelstumpfförmige Abschnitt 14' an dem kegelförmigen Abschnitt 14 des Kraftangriffs 8 und die Fase 15' des Betätigungsabschnitts 16 an der Fase 15 des Kraftangriffs 8 an. Zudem wirken die Vorsprünge 10' und die Rücksprünge 11 sowie die Rücksprünge 11' und die Vorsprünge 10 zusammen, um ein Drehmoment um die Mittelachse M zu übertragen.

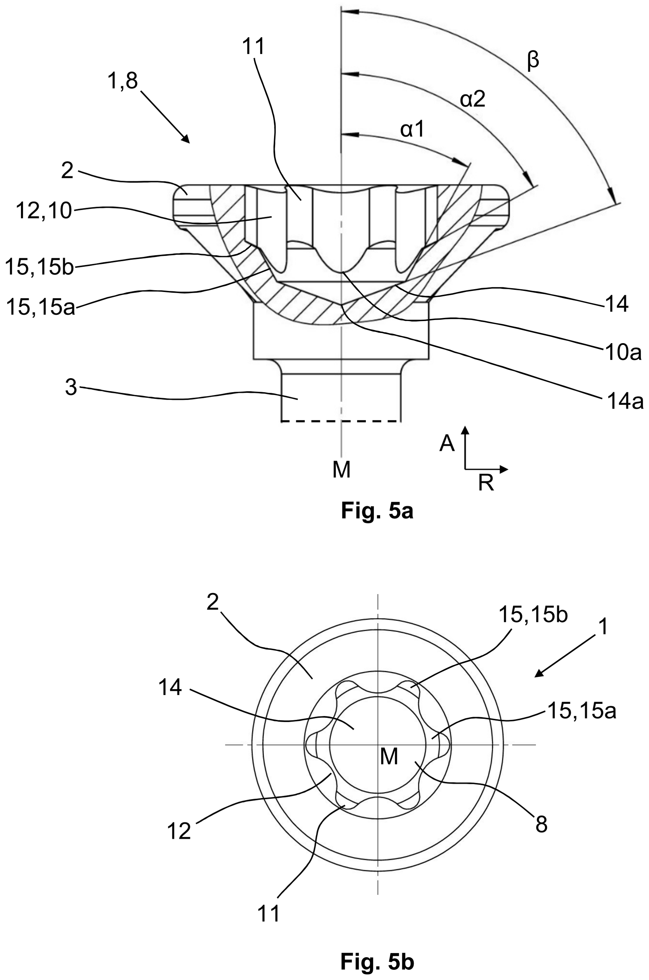

Fig. 5a zeigt ein weiteres Ausführungsbeispiel eines Schraubelementes 1 im teilweisen Schnitt entlang der Mittelachse M. Fig. 5b zeigt das Ausführungsbeispiel in einer Draufsicht auf den Kraftangriff 8. Das Schraubelement 1 ist als Universalschraube ausgebildet. Auch bei diesem Ausführungsbeispiel ist im Übergang zwischen Schraubenkopf 2 und Schaft 3 ein im Wesentlichen zylindrischer Schaftvorsprung 7 ausgebildet. Der Schaftvorsprung 7 schließt sich unmittelbar an den Schraubenkopf 2 an. Es ist auch vorgesehen, dass der Schaftvorsprung 7 eine abweichende Ausgestaltung aufweist. Die Mittelachse M des Kraftangriffs 8 fällt mit einer Mittelachse des Schraubelements 1 zusammen. Der Kraftangriff 8 dient dem Zusammenwirken mit einem Betätigungswerkzeug 9, das beispielhaft in Fig. 3 dargestellt ist.

Der Kraftangriff 8 des Schraubelements 1 weist eine Mehrzahl von auf einem Umfang um die Mittelachse M verteilt und abwechselnd angeordneten Vorsprüngen 10 und Rücksprüngen 11 auf. Die Vorsprünge 10 und Rücksprünge 11 gehen abwechselnd ineinander über. Ferner sind die Vorsprünge 10 und Rücksprünge 11 gewölbt ausgebildet. Die Vorsprünge 10 sind zu der Mittelachse M konvex und die Rücksprünge 11 konkav gewölbt.

Die Vorsprünge 10 und Rücksprünge 11 erstrecken sich in einem Einführabschnitt 12 jeweils parallel zur Mittelachse M. Keiner der Vorsprünge 10 und keiner der Rücksprünge 11 weist eine Neigung zur Mittelachse M auf. Der Kraftangriff 8 weist einen Endbereich 13 auf, der insbesondere gegenüberliegend zu dem Einführabschnitt 12 angeordnet ist. In dem Endbereich 13 ist ein kegelförmiger Abschnitt 14 angeordnet, der als Kegelspitze ausgebildet ist. Eine Spitze 14a der Kegelspitze ist auf der Mittelachse M angeordnet. Die Vorsprünge 10 und Rücksprünge 11 sind insbesondere wie bei den Ausführungsbeispielen der Fig. 2 und Fig. 3 ausgebildet.

Zwischen dem kegelförmigen Abschnitt 14 und dem Einführabschnitt 12 ist eine Fase 15 angeordnet. Die Fase 15 umgibt den kegelförmigen Abschnitt 14 in Umfangsrichtung U vollständig. Die Fase 15 weist bei diesem Ausführungsbeispiel einen ersten Fasenabschnitt 15a und einen zweiten Fasenabschnitt 15b auf. Der erste Fasenabschnitt 15a ist angrenzend an den kegelförmigen Abschnitt 14 angeordnet. Ein erster Fasenwinkel α1 des ersten Fasenabschnitts 15a ist kleiner als ein zweiter Fasenwinkel α2 des zweiten Fasenabschnitts 15b. Der erste Fasenwinkel α1 beträgt etwa 28°, der zweite Fasenwinkel α2 etwa 62°. Die Fase 15 weist durch die unterschiedlichen Fasenabschnitte 15a, 15b eine Stufe auf und ist daher einstufig ausgebildet.

Der kegelförmige Abschnitt 14 steht in radialer Richtung nicht über die Fase 15 hervor. Die den kegelförmigen Abschnitt 14 umgebende Fase 15 schneidet sowohl die Vorsprünge 10 als auch die Rücksprünge 11. Eine Erstreckung, die in axialer Richtung A in Richtung des Endbereiches 13 über die Schnittfläche der Fase 15, insbesondere des ersten Fasenabschnitts 15a, mit einem Vorsprung 10 hinausgeht, weist der Einführabschnitt 12 nicht auf. Auch enden die Rücksprünge 11 in axialer Richtung A in Richtung des Endbereiches 13 des Kraftangriffs 8 dort, wo die Fase 15 den entsprechenden Rücksprung 11 schneidet. Der Kegelwinkel β des kegelförmigen Abschnitts 14 beträgt zwischen 65° und 75°, insbesondere etwa 70°.

Die Fase 15 erstreckt sich in Verlängerung, insbesondere eines Scheitelpunktes 10a, der Vorsprünge 10 und mündet dann in den kegelförmigen Abschnitt 14. Eine Länge der Fase 15 entlang der Mittelachse M in Verlängerung der Vorsprünge 10, nämlich eines Scheitelpunktes 10a der Vorsprünge 10, ist geringer oder gleich 25 % der maximalen Länge der Fase 15 entlang der Mittelachse M.

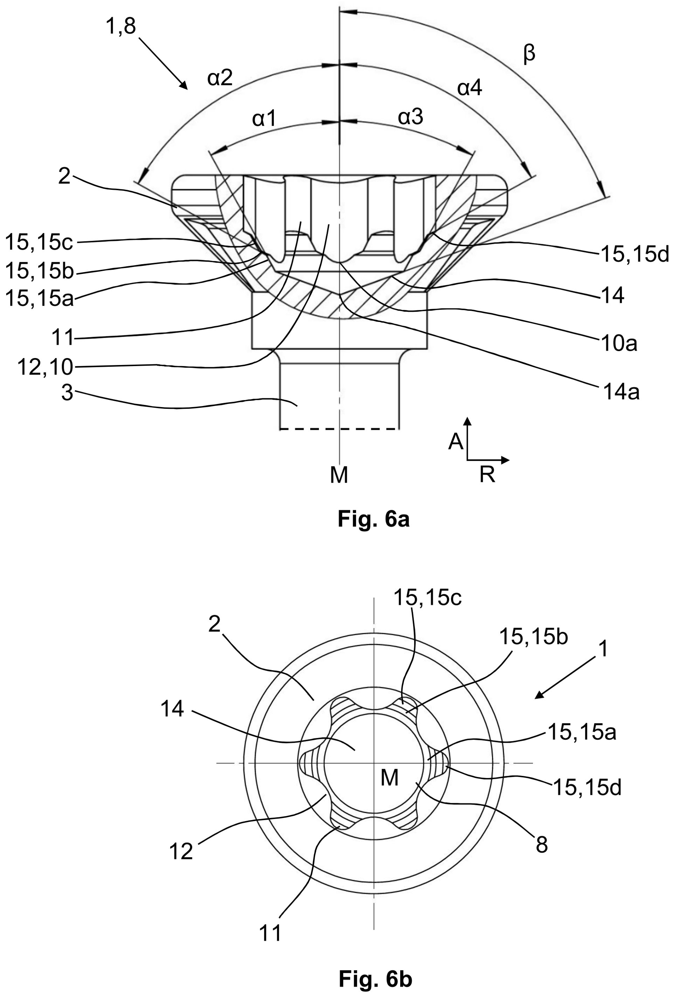

Fig. 6a zeigt ein weiteres Ausführungsbeispiel eines Schraubelementes 1 im teilweisen Schnitt entlang der Mittelachse M. Fig. 6b zeigt das Ausführungsbeispiel in einer Draufsicht auf den Kraftangriff 8. Das Ausführungsbeispiel ist im Wesentlichen wie das Ausführungsbeispiel der Fig. 5a und Fig. 5b ausgebildet, mit dem Unterschied, dass die Fase 15 zusätzlich zum ersten Fasenabschnitt 15a und zum zweiten Fasenabschnitt 15b einen dritten Fasenabschnitt 15c und einen vierten Fasenabschnitt 15d aufweist. Der dritte Fasenabschnitt 15c ist mit einem dritten Fasenwinkel α3 von etwa 28° zur Mittelachse M geneigt. Der vierte Fasenabschnitt 15d ist mit einem vierten Fasenwinkel α4 von etwa 62° zur Mittelachse M geneigt. Der erste Fasenwinkel α1 und der dritte Fasenwinkel α3 sowie der zweite Fasenwinkel α2 und der vierte Fasenwinkel α4 sind gleich. Durch die vier Fasenabschnitte 15a, 15b, 15c, 15d weist die Fase 15 zwei Stufen auf und ist daher zweistufig ausgebildet. Der Kegelwinkel β des kegelförmigen Abschnitts 14 beträgt zwischen 65° und 75°, insbesondere etwa 70°.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Schraubelement
- 2: Schraubenkopf
- 3: Schaft
- 4: Gewinde
- 5: Schraubenspitze
- 6: Gewindegrund
- 7: Schaftvorsprung
- 8: Kraftangriff
- 9: Betätigungswerkzeug
- 10, 10': Vorsprung
- 10a: Scheitelpunkt
- 11, 11': Rücksprung
- 11a': Scheitelpunkt
- 12, 12': Einführabschnitt
- 13, 13': Endbereich
- 14, 14': kegelförmiger Abschnitt
- 14a: Spitze
- 15, 15': Fase
- 15a: Fasenabschnitt
- 15b: Fasenabschnitt
- 15c: Fasenabschnitt
- 15d: Fasenabschnitt
- 16: Betätigungsabschnitt
- 17: Übergang
- 18: Befestigungsabschnitt
- α: Fasenwinkel
- α1: erster Fasenwinkel
- α2: zweiter Fasenwinkel
- α3: dritter Fasenwinkel
- α4: vierter Fasenwinkel
- β: Kegelwinkel
- A: axiale Richtung
- M, M': Mittelachse
- R: radiale Richtung
- U: Umfangsrichtung

## Patentansprüche

1. Schraubelement (1) mit einem Kraftangriff (8) für ein Betätigungswerkzeug (9), wobei der Kraftangriff (8) eine Mehrzahl von auf einem Umfang um eine Mittelachse (M) verteilt angeordneten Vorsprüngen (10) und
Rücksprüngen (11) aufweist, wobei die Vorsprünge (10) und die Rücksprünge (11) abwechselnd ineinander übergehen, wobei die Vorsprünge (10) und die Rücksprünge (11) gewölbt ausgebildet sind, und
wobei sich die Vorsprünge (10) und die Rücksprünge (11) in einem Einführabschnitt (12) jeweils parallel zur Mittelachse (M) erstrecken,
**dadurch gekennzeichnet, dass**
in einem Endbereich (13) des Kraftangriffs (8) ein kegelförmiger Abschnitt (14) ausgebildet ist, und dass sich zwischen dem kegelförmigen Abschnitt (14) und dem Einführabschnitt (12) eine den kegelförmigen Abschnitt (14) umgebende Fase (15) erstreckt.

2. Schraubelement (1) nach Anspruch 1,
**dadurch gekennzeichnet, dass**
sich die den kegelförmigen Abschnitt (14) umgebende Fase (15) mit den Vorsprüngen (10) und/oder zumindest mit den Rücksprüngen (11) schneidet, vorzugsweise dass die Fase (15) einen ersten, insbesondere kegelstumpfförmigen, Abschnitt aufweist, der von den Vorsprüngen (10) und Rücksprüngen (11) geschnitten wird, und einen zweiten, insbesondere kegelstumpfförmigen, Abschnitt, der nicht von den Vorsprüngen (10) oder Rücksprüngen (11) geschnitten wird.

3. Schraubelement (1) nach Anspruch 1 oder 2,
**dadurch gekennzeichnet, dass**
die den kegelförmigen Abschnitt (14) umgebende Fase (15) in den kegelförmigen Abschnitt (14) mündet.

4. Schraubelement (1) nach einem der Ansprüche 1 bis 3,
**dadurch gekennzeichnet, dass**
ein Fasenwinkel (α), den die Fase (15), insbesondere eine Außenfläche der Fase (15), mit der Mittelachse (M) einschließt, kleiner als ein Kegelwinkel (β) ist, den der kegelförmige Abschnitt (14), insbesondere eine Außenfläche des kegelförmigen Abschnitts (14), mit der Mittelachse (M) des Kraftangriffs (8) einschließt.

5. Schraubelement (1) nach einem der Ansprüche 1 bis 3,
**dadurch gekennzeichnet, dass**
die Fase (15) mindestens einen ersten Fasenabschnitt (15a) und mindestens einen zweiten Fasenabschnitt (15b) aufweist, insbesondere dass der erste Fasenabschnitt (15a) mit der Mittelachse (M) einen ersten Fasenwinkel (α1) einschließt, und dass der zweite Fasenabschnitt (15b) mit der Mittelachse (M) einen zweiten Fasenwinkel (α2) einschließt, vorzugsweise dass die Fase (15) mindestens einen dritten Fasenabschnitt (15c) und mindestens einen vierten Fasenabschnitt (15d) aufweist, dass der dritte Fasenabschnitt (15c) mit der Mittelachse (M) einen dritten Fasenwinkel (α3) einschließt, und dass der vierte Abschnitt (15d) mit der Mittelachse (M) einen vierten Fasenwinkel (α4) einschließt.

6. Schraubelement (1) nach einem der Ansprüche 1 bis 3 oder 5,
**dadurch gekennzeichnet, dass**
die Fase (15) zumindest teilweise konkav oder konvex gekrümmt ausgebildet ist, insbesondere dass die Fase (15) zumindest teilweise kreisförmig, bogenförmig oder splineförmig ausgebildet ist.

7. Schraubelement (1) nach einem der Ansprüche 1 bis 6,
**dadurch gekennzeichnet, dass**
eine maximale Länge der Fase (15) entlang der Mittelachse (M) größer als eine maximale Länge des kegelförmigen Abschnitts (14) entlang der Mittelachse (M) ist, insbesondere mindestens 1,2-mal länger, vorzugsweise mindestens 1,5-mal länger, bevorzugt mindestens doppelt so lang.

8. Schraubelement (1) nach einem der Ansprüche 1 bis 7,
**dadurch gekennzeichnet, dass**
eine maximale Länge mindestens eines der, vorzugsweise aller, Rücksprünge (11) entlang der Mittelachse (M) größer als eine maximale Länge der Fase (15) entlang der Mittelachse (M) ist, insbesondere mindestens 1,5-mal so lang, vorzugsweise mindestens 1,6-mal so lang, bevorzugt mindestens doppelt so lang.

9. Schraubelement (1) nach einem der Ansprüche 1 bis 8,
**dadurch gekennzeichnet, dass**
die Fase (15) sich entlang der Mittelachse (M) in Verlängerung eines der Vorsprünge (10), insbesondere eines Scheitelpunkts (10a) eines der Vorsprünge (10), erstreckt, vorzugsweise dass eine Länge der Fase (15) entlang der Mittelachse (M) in Verlängerung eines der Vorsprünge (10), insbesondere eines Scheitelpunkts (10a) eines der Vorsprünge (10), höchstens 20 %, vorzugsweise höchstens 15 %, bevorzugt höchstens 10 %, einer maximalen Länge der Fase (15) entlang der Mittelachse (M) beträgt.

10. Schraubelement (1) nach einem der Ansprüche 1 bis 9,
**dadurch gekennzeichnet, dass**
ein Durchmesser des kegelförmigen Abschnitts (14) kleiner ist als der Durchmesser eines Scheitelkreises, und dass auf dem Scheitelkreis die Scheitelpunkte (10a) der Vorsprünge (10) angeordnet sind, insbesondere dass der Durchmesser des kegelförmigen Abschnitts (14) etwa 70 % bis 95 %, insbesondere 80 % oder insbesondere 92 %, des Durchmessers eines Scheitelkreises entspricht.

11. Schraubelement (1) nach einem der Ansprüche 1 bis 10,
**dadurch gekennzeichnet, dass**
jeder der Vorsprünge (10) gleich ausgebildet ist und/oder dass jeder der Rücksprünge (11) gleich ausgebildet ist, insbesondere dass der Kraftangriff (8) symmetrisch zu einer Symmetrieachse (M) ausgebildet ist.

12. Betätigungswerkzeug (9) für ein Schraubelement (1) mit einem Kraftangriff (8), insbesondere nach einem der Ansprüche 1 bis 11, aufweisend mindestens einen Betätigungsabschnitt (16), wobei der Betätigungsabschnitt (16) eine Mehrzahl von auf einem Umfang um eine Mittelachse (M') verteilt angeordneten Vorsprüngen (10') und Rücksprüngen (11') aufweist, wobei die Vorsprünge (10') und die Rücksprünge (11') abwechselnd ineinander übergehen, wobei die Vorsprünge (10') und die Rücksprünge (11') gewölbt ausgebildet sind, wobei sich die Vorsprünge (10') und die Rücksprünge (11') in einem Einführabschnitt (12') jeweils parallel zur Mittelachse (M') erstrecken, **dadurch gekennzeichnet, dass**
in einem Endbereich (13') des Betätigungsabschnitts (16) ein kegelförmiger Abschnitt (14') angeordnet ist und dass sich zwischen dem kegelförmigen Abschnitt (14') und dem Einführabschnitt (12') eine den kegelförmigen Abschnitt (14') umgebende Fase (15') erstreckt.

13. Betätigungswerkzeug (9) nach Anspruch 12,
**gekennzeichnet durch**
den Merkmalsinhalt des Kennzeichnungsteils mindestens eines Anspruchs oder mehrerer Ansprüche der Ansprüche 2 bis 11.

14. Betätigungswerkzeug (9) nach Anspruch 12 oder 13,
**dadurch gekennzeichnet, dass**
eine maximale Länge eines der, vorzugsweise aller, Vorsprünge (10') entlang der Mittelachse (M'), größer als eine maximale Länge der Fase (15') entlang der Mittelachse (M') ist, insbesondere mindestens 1,5-mal so lang, vorzugsweise mindestens 1,6-mal so lang, bevorzugt mindestens doppelt so lang, und/oder
dass sich die Fase (15') entlang der Mittelachse (M') in Verlängerung eines der Rücksprünge (11'), insbesondere eines Scheitelpunkts (11a') eines der Rücksprünge (11'), erstreckt, insbesondere dass eine Länge der Fase (15') entlang der Mittelachse (M') in Verlängerung eines der Rücksprünge (11'), insbesondere eines Scheitelpunkts (11a') eines der Rücksprünge (11'), höchstens 25 %, insbesondere höchstens 20 %, vorzugsweise höchstens 15 %, bevorzugt höchstens 10 %, einer maximalen Länge der Fase (15') entlang der Mittelachse (M' beträgt, und/oder
dass ein Durchmesser des kegelförmigen Abschnitts (14') kleiner als der Durchmesser eines Scheitelkreises ist, und dass auf dem Scheitelkreis die Scheitelpunkte (11a') der Rücksprünge (11') angeordnet sind, insbesondere dass der Durchmesser des kegelförmigen Abschnitts (14') etwa 70 % bis 95 %, insbesondere 80 % oder insbesondere 92 %, des Durchmessers des Scheitelkreises entspricht.

15. Verwendung eines Profils mit einer Mehrzahl von auf einem Umfang um eine Mittelachse (M) verteilt angeordneten Vorsprüngen (10) und Rücksprüngen (11) als Kraftangriff (8) für ein Schraubelement (1) oder als Betätigungsabschnitt (16) eines Betätigungswerkzeugs (9), wobei die Vorsprünge (10) und Rücksprünge (11) abwechselnd ineinander übergehen, wobei die Vorsprünge (10) und die Rücksprünge (11) gewölbt ausgebildet sind, wobei sich die Vorsprünge (10) und die Rücksprünge (11) in einem Einführabschnitt (12) jeweils parallel zur Mittelachse (M) erstrecken, wobei in einem dem ersten Abschnitt (12) entgegengesetzt angeordneten Endbereich (13) ein kegelförmiger Abschnitt (14) angeordnet ist und wobei sich zwischen dem kegelförmigen Abschnitt (14) und dem ersten Abschnitt (12) eine den kegelförmigen Abschnitt (14) umgebende Fase (15) erstreckt.

16. Formwerkzeug zur Herstellung eines Kraftangriffs (8) eines Schraubelements (1), insbesondere nach einem der Ansprüche 1 bis 11, oder eines Betätigungsabschnitts (16) eines Betätigungswerkzeugs (9), insbesondere nach einem der Ansprüche 12 bis 14, wobei das Formwerkzeug eine Mehrzahl von auf einem Umfang um eine Mittelachse (M) verteilt angeordneten Vorsprüngen (10) und Rücksprüngen (11) aufweist, wobei die Vorsprünge (10) und Rücksprünge (11) abwechselnd ineinander übergehen; wobei die Vorsprünge (10) und die Rücksprünge (11) gewölbt ausgebildet sind, wobei sich die Vorsprünge (10) und die Rücksprünge (11) in einem Einführabschnitt (12) jeweils parallel zur Mittelachse (M) erstrecken, **dadurch gekennzeichnet, dass**
in einem Endbereich (13) des Kraftangriffs (8) ein kegelförmiger Abschnitt (14) angeordnet ist und dass sich zwischen dem kegelförmigen Abschnitt (14) und dem Einführabschnitt (12) eine den kegelförmigen Abschnitt (14) umgebende Fase (15) erstreckt.
